Europäisches Patentamt

European Patent Office

Office européen des brevets

(11) Publication number: **0 050 613**
**B1**

# (12) EUROPEAN PATENT SPECIFICATION

(45) Date of publication of patent specification: **21.11.84**

(21) Application number: **80901431.9**

(22) Date of filing: **23.04.80**

(86) International application number:
**PCT/US80/00449**

(87) International publication number:
**WO 81/03051 29.10.81 Gazette 81/25**

(51) Int. Cl.³: **F 16 H 15/00,** F 16 H 15/50,
F 16 H 57/04

(54) **TRACTION SURFACE COOLING SYSTEM FOR TORQUE TRANSMISSIONS.**

| | |
|---|---|
| (43) Date of publication of application: **05.05.82 Bulletin 82/18** | (73) Proprietor: **CATERPILLAR TRACTOR CO.** **100 Northeast Adams Street** **Peoria Illinois 61629 (US)** |
| (45) Publication of the grant of the patent: **21.11.84 Bulletin 84/47** | (72) Inventor: **KEMPER, Yves Jean** **841 Glengarry** **Birmingham, MI 48010 (US)** |
| (84) Designated Contracting States: **FR** | (74) Representative: **Altenburg, Udo, Dipl.-Phys. et al** **Patent- und Rechtsanwälte Bardehle-Pagenberg-Dost-Altenburg & Partner Postfach 86 06 20** **D-8000 München 86 (DE)** |
| (56) References cited: **US-A-1 971 781** **US-A-2 966 381** **US-A-2 982 145** **US-A-3 347 106** **US-A-3 677 109** | |

Courier Press, Leamington Spa, England.

## Description

This invention relates to traction drive torque transmissions and more particularly, it concerns improvements in traction surface cooling apparatus for such transmissions.

In traction drive transmissions, torque is transmitted by rolling friction between one or more pairs of traction surfaces on components arranged to be retained against one another in a manner to develop normal forces adequate to prevent slippage between the surfaces. Such transmissions are particularly useful in the transmission of power at continuously or infinitely variable speed ratios because of the facility offered by the smooth rolling surfaces of each traction surface pair for an infinitely variable radius ratio. Examples of such infinitely variable transmissions are disclosed in USE—29,328, US—A—4,112,779 US—A—4 112 780, and US—A—4 152 946, all of which are owned by the assignee of the present invention.

Though seemingly inconsistent with transmission of torque by friction, the rolling or traction surfaces of the transmission exemplified by the disclosures of the aforementioned patents and application are lubricated and cooled by circulating a liquid lubricant through the transmission housing. Torque transfer is, in actuality, by viscous shear of a very thin film of lubricant between the traction surfaces which are smooth tool steel. The lubricants used are synthetic oils developed specifically for traction drives and increase in viscosity under the pressures existing between the traction surfaces to a point of becoming almost glassy in character. Accordingly, high coefficients of traction are possible without abnormal deterioration of the contacting surfaces.

As indicated, the liquid lubricant functions also as a heat storage medium by which the heat developed at the traction surfaces is transferred to the exterior of the transmission housing by recirculation and cooling of the lubricant. Partially because of the relative motion between the traction surfaces and the recirculated lubricant, and also in part because of the viscosities reached by the lubricant, a boundary layer of lubricant tends to build on the surfaces to a point where the torque transmitting efficiencies of the lubricant is reduced and more critically, the transfer of heat to the recirculated lubricant is impeded. These problems created by the boundary layer of lubricant are, moreover, dichotomous in the sense that the reduction of torque transmitting efficiency can be avoided by circulating less lubricant over the surfaces whereas the removal of heat developed by the stresses imposed on the traction surfaces required large quantities of the lubricant to be circulated over the same surfaces. Hence, the solution of these problems in the past have involved a trade-off or compromise between rated power transmission capacity and useful life of a paricular transmission unit.

The object of the present invention is to eliminate the disadvantages of the known systems discussed above and to provide a traction drive torque transmission according to the preamble of claim 1 with an improved cooling apparatus which is very simply accommodated in an existing transmission and by which the deleterious effects of a boundary layer of lubricant are avoided to increase the transfer of heat from lubricant carrying traction surfaces to a liquid lubricant recirculated through the transmission without affecting the rheological characteristics of the lubricant needed to transmit torque by viscous shear.

This object is solved within a traction drive torque transmission according to the preamble of claim 1 according to the invention by the features of the characterizing part of claim 1.

In accordance with the present invention, the removal of thermal energy or heat from the rolling friction surfaces of traction drive transmissions by recirculation of a liquid lubricant is enhanced without reduction in viscous film torque transmitting efficiency by mechanically wiping or scraping the traction surfaces to eliminate the boudnary layer of lubricant on the surfaces. This operation is achieved very simply by providing wipers on a component which moves relative to the engaging surfaces of the respective traction surface pairs. The wipers are either elongated to be effective over the complete axial extent of the traction surfaces or in the form of a pattern of discrete wiping zones extending over a substantial portion of the traction surface area. Further, the wipers are preferably located in relation to porting or conduit openings through which the lubricant is passed to the traction surfaces so that localized heat developing at the points of traction surface engagement will pass immediately to freshly supplied lubricant and carried thereby to the exterior of the transmission.

Other objects and further scope of applicability of the present invention will become apparent from the detailed description to follow taken in conjunction with the acompanying drawings.

Fig. 1 is a longitudinal cross-section illustration of a transmission incorporating the invention;

Fig. 2 is an enlarged fragmentary cross-section on line 2—2 of Fig. 1;

Fig. 3 is an enlarged fragmentary cross-section on line 3—3 of Fig. 1;

Fig. 4 is a plan view of a transmission component incorporating an alternative embodiment of the invention;

Fig. 5 is a cross-section on line 5—5 of Fig. 4;

Fig. 6 is a fragmentary cross-section on line 6—6 of Fig. 5;

Fig. 7 is a plan view like Fig. 4 but illustrating another alternative embodiment; and

Fig. 8 is a fragmentary cross-section on line 8—8 of Fig. 7.

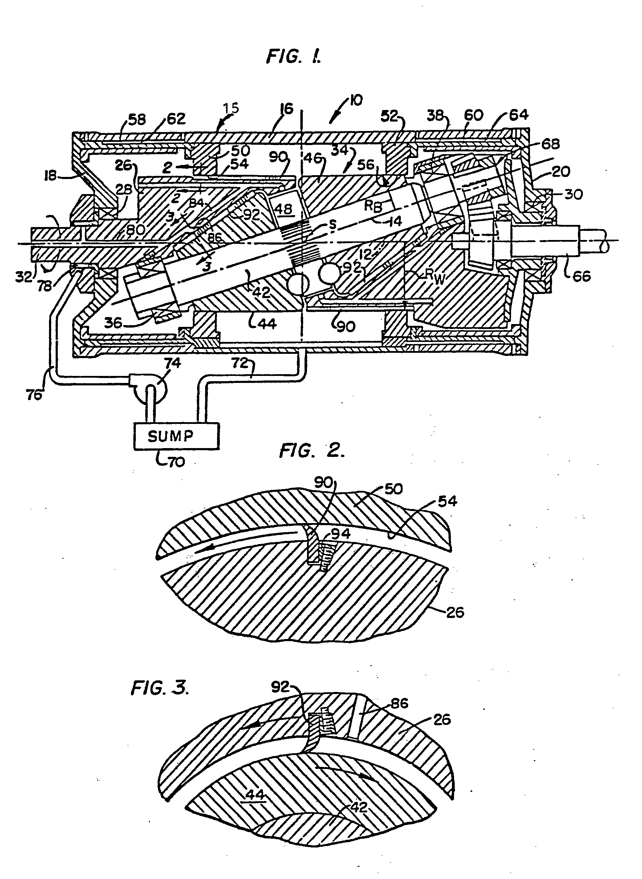

In Fig. 1 of the drawings, an exemplary embodiment of an infinitely variable traction drive transmission incorporating the present invention is shown in longitudinal cross-section and designated generally by the reference numeral 10. Although the structure and operation of the transmission is fully described in the aforementioned U.S. Patents, a summary description of the transmission 10 will facilitate a complete understanding of the present invention.

The plane of the cross-section in Fig. 1 includes a first or primary transmission axis 12 and a second or nutational axis 14 inclined with respect to the axis 12 and intersecting same at a point S of axes intersection. The orientation of the first axis 12 is established by a fixed frame 15 in the form of a cylindrical housing 16 closed at opposite ends by journalled end sections 18 and 20. Components located within the housing 16 include a crank-like alpha body 26 supported by bearings 28 and 30 in the frame end sections 18 and 20 for rotation about the primary or first axis 12. An input shaft 32 is connected directly to the alpha body 26 and is thus concentric with the axis 12. A nutatable beta body, generally designated by the reference numeral 34, is supported by bearings 36 and 38 in the alpha body 26 for rotation about the second axis 14. In the disclosed embodiment, the beta body 34 includes a central supporting shaft 42 on which a pair of oppositely convergent conical members 44 and 46 are supported for some measure of both axial and rotational movement relative to the shaft 42. A ball/ramp unit 48 is slidably keyed or splined on the shaft 42 between the cone members 44 and 46. The unit 48 functions to bias the cone members in opposite directions away from the point S in response to a torque differential between the shaft 42 and the cone members 44 and 46 and to couple the cone members rotatably with the shaft. It will be noted also that the conical surfaces of the members 44 and 46, also referred to herein as beta traction surfaces, are concentric with the second axis 14 and are of a variable radius $R_b$ with respect to that axis.

The axial bias of the cone members 44 and 46 by the ball/ramp unit 48 along the shaft 42, coupled with the angular relationship of the axis 14 as well as the configuration of the conical members, causes the conical beta surfaces on the members 44 and 46 to be urged into engagement with a pair of axially adjustable omega rings 50 and 52 defining interior omega rolling or traction surfaces 54 and 56 which are of revolution about the primary axis 12 and of a constant radius $R_w$. The rings 50 and 52 are secured against rotation in the frame section 16 and are fixed at the inner ends of annular piston members 58 and 60 operably positioned respectively in annular chambers 62 and 64. The chambers 62 and 64 are ported to hydraulic fluid conduits (not shown) in such a manner that pressurized control fluid in the chambers 62 and 64 will cause the pistons and thus the rings 50 and 52 to move along the axis 12 toward or away from the point S of axes intersection.

In the operation of the transmission 10 to transmit torque originating at the input shaft 32, the alpha body 26 is rotated directly with the input shaft 32 causing the second axis 14 and thus the beta body 34 to nutate about the first axis 12 with the beta traction surfaces on the exterior of the cone members 44 and 46 in contact on opposite sides of the primary axis 12 with the omega traction surfaces 54 and 56 on the rings 50 and 52. The shaft 42, rotatable with the cone members 44 and 46 on the second axis 14 is coupled or linked to an output shaft 66 by an epicyclic gear set 68. Thus it will be seen that torque at the output shaft 66 will be the result of input torque driving the alpha body 26 in rotation about the first axis to cause planetary movement in the gear set 68 together with torque transmitted by friction between the omega surfaces 54 and 56 and the beta surfaces on the cone members 44 and 46 to cause rotation of the beta body 34 and the shaft 42 about the second axis 14. Further, the ball/ramp system 48 urges the cone members 44 into engagement with the omega rings 50 and 52 to develop a normal force proportional to torque transmitted by the shaft 42.

To lubricate and to cool the operating components of the transmission 10, a liquid lubricant is circulated from an external storage source such as a sump 70 to the interior of the housing 16 and returned to the sump by a gravity flow line 72. The lubricant is fed to the transmission by a pump 74 through a conduit 76 to a sealed gland or manifold 78 in the end frame 18 adjacent the bearing 28. The shaft 32 is internally bored to provide a lubricant passageway 80 which communicates with branch passages 84 in the alpha body 26. These latter passages communicate directly with discharge ports 86 in the body 26 as may be understood by reference to Figs. 1 and 3.

In the embodiment of Figs. 1—3, the alpha body 26 carries two sets of elongated blade-like scrapers 90 and 92 respectively. As shown in Fig. 1, the blades 90 are positioned to engage the omega traction surfaces 54 diametrically opposite from the point at which these surfaces are engaged by the beta traction surfaces on the conical members 44 and 46. These blades are elongated so that they will engage the surfaces 54 and 56 throughout axial movement of the rings 50 and 52 in the operation of the transmission 10 to vary the speed ratio thereof. As shown in Fig. 2, the blades 90 project from the surface of the alpha body 26 in a manner effective to scrape the traction surfaces 54 as a result of the direction of rotation of the alpha body 26. Though illustrated in Fig. 2 to have a tapered or knife-like edge, the blades may be of a variety of specific configurations appropriately secured to the body 26 such as by clamping wedges 94. Also, the material from which the blades are formed may include synthetic resinous materials or may be metallic.

Because of the relative rotation of the respective transmission bodies 26 and 34, the blades 92, which are identical in construction to the blades 90, project inwardly from the alpha body 26 in a manner to effectively remove lubricant from the surfaces of the members 44 and 46 as a result of relative rotation between the bodies 26 and 34. The blades 92 also extend in length through at least the axial distance of contact between the omega and beta surfaces.

Although the precise location of the blades 92 on the alpha body 26 is not critical, it will be noted that the oil discharge ports 86 from which oil is directed against the surfaces of the beta cone members 44 and 46 are positioned behind the blades 92 in terms of alpha-beta body rotation. As a result, residual lubricant on the surfaces of the cones, including lubricant resulting from a boundary layer phenomenon will be removed from these surfaces in advance of the application of newly recirculated lubricant from the ports 86. In this way the heat transfer from the surfaces 54 and 56 to the lubricant will be enhanced.

In the operation of the transmission 10, relatively cool lubricant will be pumped from the sump 70 through the passageways 80 and 84 in the alpha body 26 and be discharged through the ports 86 directly against the beta traction surfaces on the exterior of the cone members 44 and 46. Though not shown in the drawings, it is contemplated that the lubricant may be cooled by an appropriate heat exchanger associated with the sump 70 or with the passages 72 or 76 on the exterior of the transmission 10. Because of the location of the ports 86 relative to the blades 92, the fresh, cooled lubricant will engage the beta surfaces immediately after they have been wiped clean of any residual lubricant, thereby to enhance the passage of heat from the cone members 44 and 46 to the freshly supplied lubricant. The major portion of the lubricant will pass outwardly by centrifugal force to the omega rings 50 and 52 and other components inside the housing 16 from which it will pass back to the sump through the line 72. Although no direct porting is provided by which fresh lubricant is passed directly to the omega traction surfaces 54 and 56, the lcoation of these rings about the exterior of the alpha body 26 and the beta body 34 enables a supply of lubricant to pass to these surfaces adequate to maintain lubrication of these surfaces as needed for the prevention of wear or deterioration of the surfaces 54 and 56. Cooling of the surfaces 54 and 56 will occur as a result of heat transfer from the surfaces 54 and 56 to the conical surfaces on the members 44 and 46 as well as by heat transfer to the lubricant recirculated to the sump 70. In this latter respect, although the temperature of the lubricant on reaching the rings 50 and 52 may be higher than it is at the surfaces on the cones 44 and 46, the removal of residual lubricant from the surfaces 54 and 56 by the blades 90 coupled with the relatively large ratio of total ring surface area to the area of working or traction surfaces 54 and 56 will prevent any excessive heat build up in the rings 50 and 52.

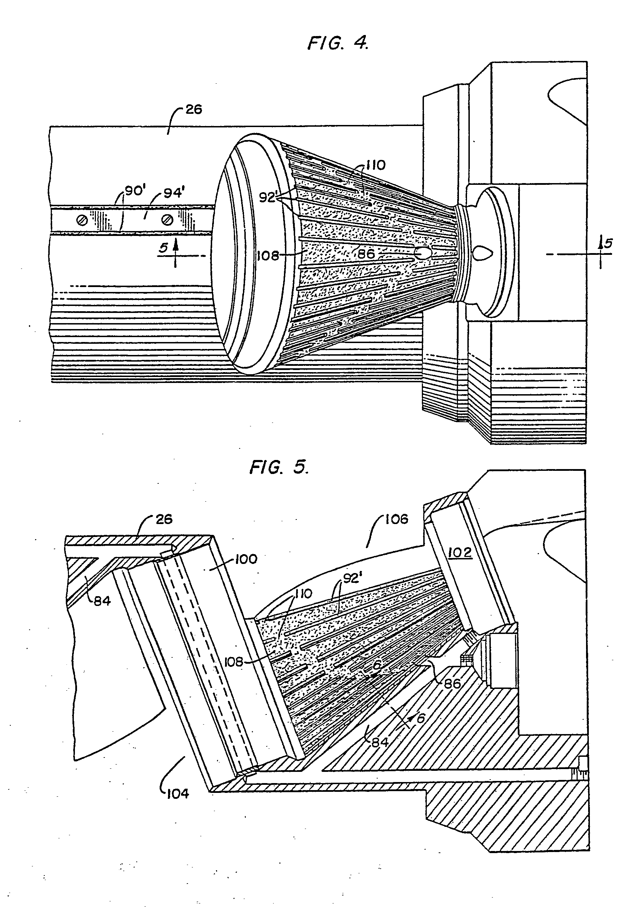

In Figs. 4—6 of the drawings, an alternative embodiment of the invention is shown in which parts identical with those of Figs. 1—3 are designated by the same reference numeral whereas parts having the same function but modified in structure are designated by the same reference numerals modified in structure are designated by the same reference numerals primed. Thus, in Figs. 4 and 5 the alpha body 26 is shown by shown by itself and in somewhat more detail than in Fig. 1. It will be seen more clearly in these figures, for example, that the body 26 is an integral or unitary member having a pair of symmetrical frusto-conical cavities 96 and 98 extending between a central cylindrical portion 100 to counterbores 102 in which the bearings 36 and 38 (see Fig. 1) are seated. The cavities 96 and 98 complement the exterior shape of the cone members 44 and 46 in a manner such that the cavity delimiting surfaces are normally spaced out of contact with the cone members. The cavities 96 are also sectors in the sense that they open at diametrically opposite windows 104 and 106 through which the cone members 44 and 46 contact the traction surfaces 54 and 56 on the omega rings 50 and 52. The arrangement of lubricant passages 84 and ports 86 is the same in Figs. 4—6 as that of Fig. 1.

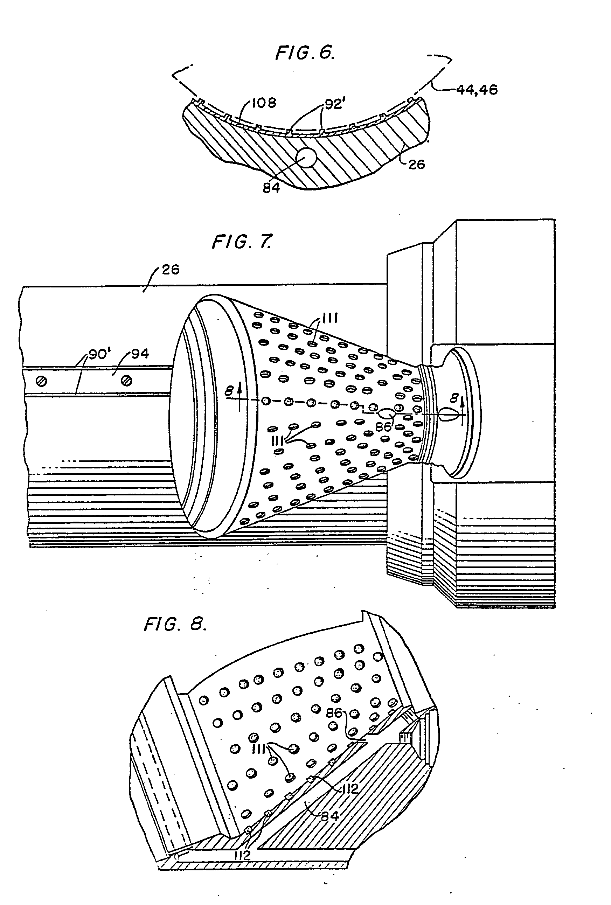

In the embodiment of Figs. 4—6, a single wiper blade assembly 90' is again positioned on the exterior of the alpha body 26 to wipingly engage the traction surfaces 54 and 56. In this instance, the blades 90' are defined by spaced edges of flexible material retained by a central bar 94' in essentially the same manner as the blades 90 of the embodiment of Figs. 1—3. In place of the single blades 92, however, a plurality of blade-like portions 92' are employed in this embodiment. As shown most clearly in Figs. 5 and 6, the multiple blades 92' extend longitudinally to be effective over the full length of each of the cone members 44 and 46 and are provided as integral formations on a sheet-like molding 108 of a shape to conform with the frusto-conical configuration of the cavities 96 and 98. The sheet-like molding 108 may be secured by an appropriate adhesive or bonded within the cavities in the position illustrated.

To insure a complete distribution of lubricant between the blade portions 92' and thus against the exterior of the cone members 44 and 46, the blades 92' are interrupted along their respective lengths to establish lubricant passing openings or gaps 110. The openings 110 are preferably staggered or offset from each other axially in order that the wiping function of the blade portions 92' will be effective throughout the working length of the cone members 44 and 46.

In light of the provision of multiple blade portions 92' in the embodiment of Figs. 4—6, a more complete removal of residual lubricant remaining on the cone members 44 and 46 will be effected. On the other hand, a complete distribution of fresh and cool lubricant over a substantial portion of the cone surfaces will enhance the removal of heat from the thus cool the working traction surfaces on the conical members 44 and 46.

In Figs. 7 and 8, a still further embodiment of the invention is illustrated. In this embodiment, the function of the blades 92 and 92' of the previous embodiments is served by a plurality of discrete wiping plugs 111 arranged within the frusto-conical cavities of the alpha body 26 to be in a staggered pattern again effective over the entire length of the conical surfaces on the members 44 and 46. As shown most clearly in Fig. 8, the wiping elements 110 are in the nature of plugs of felt-like material individually receivable in relatively shallow holes 112 bored into the surfaces of the cavities 96 and 98. The pattern of the plugs will in itself assure uniform distribution of fresh or cool lubricant fully over the surfaces of the cone members 44 and 46.

Thus it will be seen that as a result of the present invention, a highly effective apparatus is provided for cooling the frictionally engaged rolling surfaces of traction drive transmissions and by which the above-mentioned objectives are completely fulfilled. Also it will be appreciated that modifications may be made in the embodiments disclosed without departure from the inventive concepts manifested by such embodiments. It is expressly intended, therefore, that the foregoing description is illustrative of a preferred embodiment, not limiting, and that the true spirit and scope of the present invention be determined by reference to the appended claims.

## Claims

1. In a traction drive torque transmission having a frame (15) defined by a closed housing, an alpha body (26) supported by said frame for rotation about a first axis (12), a beta body (34) supported for relative rotation from said alpha body on a second axis (14) inclined with respect to and intersecting said first axis at a point (S) of axes intersection, said beta body defining a pair of traction surfaces of revolution about said second axis, one on each side of said point of axes intersection, means defining a pair of omega traction surfaces (54, 56) of revolution about said first axis, one on each side of said point of axes intersection and means (48) for forcing said beta and omega surfaces into rolling frictional engagement with each other at two points diametrically opposite from each other with respect to the said first axis, and means (70, 72, 74, 76) for circulating a liquid lubricant into said housing against said beta and omega surfaces and out of said housing, characterized in that wiping means (90, 92, 90', 92', 111) are supported by said alpha body (26) for engagement with each of said omega and beta surfaces and operative to remove lubricant from said traction surfaces thereby to increase the rate of heat transfer from said surfaces to the lubricant.

2. The apparatus recited in claim 1 characterized in that the traction surfaces on the beta body (34) are external surfaces of revolution nested in complementary cavities (96, 98) defined by surfaces in the alpha body (26) spaced from the beta body traction surfaces and in that said wiping means comprises a sheet-like molding (108) secured against the cavity defining surfaces, said molding having a plurality of angularly spaced, longitudinally extending and projecting rib formations (92') to engage and wipe the traction surfaces of the beta body.

3. The apparatus recited in claim 2 characterized in that each of said rib formations (92') is interrupted along the length thereof to provide lubricant passage (110) by which lubricant may pass in direct contact with the area of the beta body traction surfaces within said cavities.

4. The apparatus recited in claim 1 characterised in that the traction surfaces on the beta body (34) are external surfaces of revolution nested in complementary cavities (96, 98) defined by surfaces in the alpha body (26) spaced from the beta body traction surfaces and in that said wiping means comprises a plurality of discrete wiping pads (111) in said cavity defining surfaces, said wiping pads being arranged in a staggered pattern and operative to engage the wipe traction surfaces on the beta body.

5. The apparatus recited in claim 2 or 4 characterized in that a single lubricant port (86) is provided in the alpha body (26) opening through each of said cavity defining surfaces to direct lubricant against the respective traction surfaces of the beta body (34).

6. The apparatus recited in claim 1 characterised in that said wiping means comprises elongated blade-like members (90, 92, 92').

7. The apparatus recited in claim 6 characterized in that said blade-like members (90, 92, 92') are of a length to be effective over the complete axial distance of frictional engagement between the traction surfaces.

8. The apparatus recited in either of claims 1, 6 or 7 characterized in that lubricant discharge ports (86) are provided in the rotatable body to direct lubricant against at least one of the traction surfaces immediately after the removal of lubricant therefrom.

9. The apparatus recited in either of claims 6 or 7 characterized in that said blade-like members are defined as rib formations (92′) on a sheet-like molding (108) secured to the rotatable body.

10. The apparatus recited in claim 9 characterized in that a plurality of said rib formations are provided and in that each of said rib formations (92′) is interrupted along the length thereof to provide a lubricant passage (110) through each rib formation.

11. The apparatus recited in claim 1 characterised in that said wiping means comprises a staggered pattern of discrete wiping pads (111) supported by the rotatable body.

**Revendications**

1. Transmission de couple à entraînement par traction comprenant un châssis (15) défini par un carter fermé, un élément alpha (26) supporté par ledit châssis pour tourner autour d'un premier axe (12), un élément béta (34) supporté par ledit élément alpha pour autoriser une rotation relative par rapport à cet élément, autour d'un deuxième axe (14) incliné par rapport audit premier axe et qui coupe le premier axe en un point (S) d'intersection des axes, ledit élément béta définissant deux surfaces de traction de révolution autour du deuxièmre axe, une de chaque côté du point d'intersection des axes, des moyens qui définissent une paire de surfaces de traction oméga (54, 56) qui sont de révolution autour dudit premier axe, une de chaque côté du point d'intersection des axes et des moyens (48) servant à forcer les surfaces béta et oméga à entrer en prise par frottement de roulement entre elles en deux points diamétralement opposés, l'un de l'autre, par rapport audit premier axe, et des moyens (70, 72, 74, 76) servant à faire circuler un lubrifiant liquide dans ledit carter, contre lesdites surfaces béta et omége et à le faire sortir dudit carter, caractérisée en ce que des moyens d'essuyage (90, 92, 90′, 92′, 111) sont supportés par ledit élément alpha (26) pour coopérer avec chacune desdites surfaces oméga et béta et agissent pour éliminer le lubrifiant desdites surfaces de traction pour accroître ainsi la vitesse de transfert de la chaleur desdites surfaces au lubrifiant.

2. Appareil suivant la revendication 1, caractérisé en ce que les surfaces de traction formées sur l'élément béta (34) sont des surfaces externes de révolution logées dans des cavités complémentaires (96, 98) définies par des surfaces de l'élément alpha (26) qui sont espacées des surfaces de traction de l'élément béta et en ce que lesdits moyens d'essuyage comprennent une pièce moulée (108) en forme de feuille, qui est fixée contre les surfaces définissant les cavités, ladite pièce moulée ayant plusieurs nervures (92′), espacées angulairement, qui s'étendent longitudinalement et son en saillie, pour entrer en contact avec les surfaces de traction de l'élément béta et les essuyer.

3. Appareil suivant la revendication 2 caractérisé en ce que chacune des nervures (92′) est interrompue sur sa longueur pour former des passages de lubrifiant (110) par lesquels le lubrifiant peut entrer en contact direct avec la zone des surfaces de traction de l'élément béta située à l'intérieur desdites cavités.

4. Appareil suivant la revendication 1, caractérisé en ce que les surfaces de traction de l'élément béta (34) sont des surfaces externes de révolution logées dans des cavités complémentaires (96, 98) définies par des surfaces de l'élément alpha (26) qui sont espacées des surfaces de traction de l'élément béta et en ce que lesdits moyens d'essuyage comprennent plusieurs tampons d'essuyage séparés (111) logés dans lesdites surfaces définissant les cavités, lesdits tampons d'essuyage étant disposés en quinconce et fonctionnant pour entrer en contact avec les surfaces de traction de l'élément béta et les essuyer.

5. Appareil suivant la revendication 2 ou 4, caractérisé en ce qu'un orifice de lubrifiant unique (86) est prévu dans l'élément alpha (26) et débouche à travers chacune desdites surfaces définissant les cavitiés pour diriger le lubrifiant contre les surfaces de traction respectives de l'élément béta (34).

6. Appareil suivant la revendication 1, caractérisé en ce que lesdits moyens d'essuyage comprennent des éléments du type lame allongée (90, 92, 92′).

7. Appareil suivant la revendication 6, caractérisé en ce que lesdits éléments du type lame (90, 92, 92′) sont d'une longueur telle qu'ils soient efficaces sur toute la distance axiale de contact de frottement entre les surfaces de tractior.

8. Appareil suivant l'une quelconque des revendications 1, 6 et 7, caractérisé en ce que des orifices de sortie du lubrifiant (86) sont prévus dans l'élément rotatif pour diriger le lubrifiant contre au moins l'une des surfaces de traction immédiatement après l'élimination du lubrifiant de cette surface.

9. Appareil suivant l'une quelconque des revendications 6 et 7, caractérisé en ce que lesdits éléments du type lame sont définis par des nervures (92′) prévues sur une pièce moulée (108) en forme de feuille fixée à l'élément rotatif.

10. Appareil suivant la revendication 9, caractérisé en ce que plusieurs nervures sont prévues et que chacune de ces nervures (92′) est interrompue sur sa longueur pour former un passage de lubrifiant (110) à travers chaque nervure.

11. Appareil suivant la revendication 1, caracterisé en ce que lesdits moyens d'essuyage comprennent une matrice en quinconce de tampons d'essuyage séparés discrets (111) supportés par l'élément rotatif.

**Patentansprüche**

1. Drehmomentübertragungs einrichtung mit Reibungsdrucktrieb mit einem durch ein geschlossenes Gehäuse bestimmten Rahmen (15), einem vom Rahmen für eine Drehung um eine erste Achse (12) getragenen Alphakörper (26), einem vom Alphakörper für eine relative Drehung im eine zweite Achse (14) getragenen Betakörper (34), wobei die zweite Achse zur ersten Achse geneigt ist und die erste Achse in einem Achsenschnittpunkt (S) schneidet und wobei der Betakörper ein Paar von Reibungsdruckdrehflächen um die zweite Achse, eine auf jeder Seite des Achsenschnittpunktes, aufweist, mit Einrichtungen, dei ein Paar von Omegareibungsdruckdrehflächen (54, 56) um die erste Achse, eine auf jeder Seite des Achsenschnittpunktes, aufweisen, und mit Einrichtungen (48), welche die Beta- und Omegaflächen in Rollreibungseingriff miteinander an zwei im Verhältnis zur ersten Achse diametral gegenüberliegenden Punkten bringen, und mit Einrichtungen (70, 72, 74, 76) zum Umwälzen eines flüssigen Schmiermittels in das Gehäuse gegen die Beta- und Omegaflächen und aus dem Gehäuse heraus, dadurch gekennzeichnet, daß Abstreifeinrichtungen (90, 92, 90', 92', 111) vom Alphakörper (26) getragen werden, welche mit den Omega- und Betaflächen in Eingriff stehen und eine Entfernung des Schmiermittels von den Reibungsdrukflächen bewirken, um hierdurch die Wärmeübertragungsrate von diesen Flächen zu dem Schmiermittel zu erhöhen.

2. Einrichtung nach Anspruch 1, dadurch gekennzeichnet, daß die Reibungsdruckflächen auf dem Betakörper (34) äußere Drehflächen sind, die in komplementären Hohlräumen (96, 98) einegebettet sind, die von im Abstand von den Reibungsdruckfläche des Betakörpers angeordneten Flächen im Alphakörper (26) bestimmte sind, und daß die Abstreifeinrichtungen ein blechartiges Formteil (108) aufweisen, das an den den Hohlraum bestimmenden Fläche befestigt ist und eine Vielzahl von winkelmäßig beabstandeten, sich längs erstreckenden und vorspringenden Rippenausbildungen (92') hat, um die Reibungsdruckflächen des Betakörpers zu beaufschlagen und abzustreifen.

3. Einrichtung nach Anspruch 2, dadurch gekennzeichnet, daß die Rippenausbildungen (92') in Längsrichtung unterbrochen sind, um Schmiermitteldurchlässe (110) zu schaffen, durch welche Schmiermittel in direkte Berührung mit dem Bereich der Betakörper-Reibungsdruckflächen innerhalb der Hohlräme bringbar ist.

4. Einrichtung nach Anspruch 1, dadurch gekennzeichnet, daß die Reibungsdruckflächen auf dem Betakörper (34) äußere Drehflächen sind, die in komplementären Hohlräumen (96, 98) eingebettet sind, die von im Abstand von den Reibungsdruckflächen des Betakörpers angeordneten Flächen im Alphakörper (26) bestimmt sind, und daß die Abstreifeinrichtungen aus einer Veilzahl von gesonderten Abstreifkissen (111) in den den Hohlraum bestimmenden Flächen bestehen, welche in einem versetzten Muster angeordnet sind und die Reibungsdruckflächen auf dem Betakörper beaufschlagen und abstreifen.

5. Einrichtung nach Anspruch 2 oder 4, dadurch gekennzeichnet, daß ein einziger Schmiermitteldurchlaß (86) in dem Alphakörper (26) vorgesehen ist, welcher jede der den Hohlraum bestimmenden Flächen durchstößt, um Schmiermittel gegen die jeweiligen Reibungsdruckflächen des Betakörpers (34) zu richten.

6. Einrichtung nach Anspruch 1, dadurch gekennzeichet, daß die Abstreifeinrichtungen langgestreckte zungenartige Elemente (90, 92, 92') aufweisen.

7. Einrichtung nach Anspruch 6, dadurch gekennzeichnet, daß die zungenartigen Elemente (90, 92, 92') eine derartige Länge aufweisen, daß sie über die gesamte axiale Strecke des Reibungseingriffes zwischen den Reibungsdruckflächen wirksam sind.

8. Einrichtung nach Anspruch 1, 6 oder 7, dadurch gekennzeichnet, daß Durchlaßeinrichtungen (86) zur Schmiermittelausgabe im drehbaren Körper vorgesehen sind, um Schmiermittel gegen mindestens eine der Reibungsdruckflächen unmittelbar nach der Entfernung des Schmiermittels zu richten.

9. Einrichtung nach Anspruch 6 oder 7, dadurch gekennzeichnet, daß die zungenartigen Elemente Rippenausbildungen (92') auf einem blechartigem Formteil (108) sind, das an dem drehbaren Körper befestigt ist.

10. Einrichtung nach Anspruch 9, dadurch gekennzeichnet, daß eine Vielzahl von Rippenausbildungen vorgesehen ist und daß jede Rippenausbildung (92') in Längsrichtung unterbrochen ist, um einen Schmiermitteldurchlaß (110) durch jede Rippenausbildung zu schaffen.

11. Einrichtung nach Anspruch 1, dadurch gekennzeichnet, daß die Abstreifeinrichtungen ein versetztes Muster von gesonderten Abstreifkissen (111) aufweisen, die vom drehbaren Körper getragen werden.

0 050 613

FIG. 1.

SUMP

FIG. 2.

FIG. 3.

1

0050613

FIG. 4.

FIG. 5.

2

**0 050 613**

*FIG. 6.*

108    92'    44,46

26

84

*FIG. 7.*

26

111

90'    94

B

B

86

111

*FIG. 8.*

86

111

112

84

112

3